# EUROPEAN PATENT APPLICATION

(11) **EP 4 769 706 A1**
(43) Date of publication of application: **01.07.2026**
(21) Application number: 25833266.7
(22) Date of filing: 17.06.2025
(51) Int. Cl.: H01M 50/207, H01M 50/249, H01M 50/258, H01M 50/262

(54) **BATTERY MODULE, BATTERY PACK AND VEHICLE INCLUDING SAME**

(30) Priority: 03.07.2024 KR 20240087528
(71) Applicant: LG Energy Solution, Ltd., Seoul 07335 (KR)
(72) Inventor: PARK, Jin-Soo, Daejeon 34122 (KR); KIM, Chang-Hyun, Daejeon 34122 (KR); NA, Jong-Seung, Daejeon 34122 (KR); LEE, So-Jeong, Daejeon 34122 (KR); CHA, Hun, Daejeon 34122 (KR)
(74) Representative: BCKIP Part mbB
(86) International application number: PCT/KR2025/008334
(87) International publication number: WO 2026/010207

(57) **Abstract**

The present disclosure relates to a battery module including: a cell assembly including a plurality of battery cells; and a module frame configured to store the cell assembly and including a first frame and a second frame coupled such that one side of each at least partially overlaps the other.

## Description

### TECHNICAL FIELD

The present disclosure relates to a battery module, and a battery pack and vehicle including the same.

This application is based on and claims priority from Korean Patent Application No. 10-2024-0087528, filed on July 03, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack.

A common method for configuring a battery pack by connecting multiple battery cells in series/parallel is performed by preferentially configuring a battery module including one or more battery cells and then by adding other components to one or more battery modules to configure a battery pack or battery rack. Recently, cell-to-pack-type battery packs in which multiple battery cells are directly stored in a pack housing or the like, instead of modularizing the same, have been manufactured.

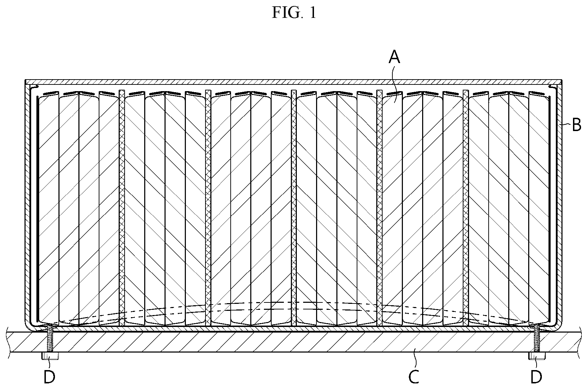

Meanwhile, referring to FIG. 1, in conventional battery modules, battery cells A are stacked in one direction and stored in a module frame B. In addition, a cooling plate C for cooling the battery module is provided on the outer side of the battery module B.

In this case, the bottom side of the module frame B of the battery module and the cooling plate C are assembled using a connecting member D such as a bolt. In particular, since the connecting members D are coupled to the edges of the module frame B, the central portion of the bottom side of the module frame B lifts due to shear force.

Accordingly, there is a problem in which the battery cells A provided in the central portion of the battery module are not in close contact with the cooling plate C, causing deterioration of cooling performance. Furthermore, if the cooling performance is not uniform among the battery cells A, temperature differs among the battery cells A, and the expected lifespan of the battery module is reduced.

Therefore, there is a need to develop a structure capable of improving the cooling performance of the battery module by implementing uniform contact between the bottom side of the battery module and the cooling plate.

### DISCLOSURE

### Technical Problem

The present disclosure is designed to solve the problems of the related art, and therefore the present disclosure is directed to providing a battery module with enhanced cooling performance by securing uniform cooling performance across battery cells, and a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a cell assembly including a plurality of battery cells; and a module frame configured to store the cell assembly and including a first frame and a second frame coupled such that one side of each at least partially overlaps the other.

The first frame and the second frame may be configured in a bent shape.

The first frame and the second frame may each include a horizontal portion configured to allow the cell assembly to be seated thereon, and a vertical portion configured to extend in a vertical direction from an end of the horizontal portion.

The horizontal portion of the first frame and the horizontal portion of the second frame may be configured to at least partially overlap each other.

The battery module may further include a fixing member configured to combine the overlapping portions of the first frame and the second frame.

The fixing member may be configured to be inserted into the overlapping sides of the first frame and the second frame.

The fixing member may be configured to extend along a longitudinal direction of the battery cell.

The fixing member may be configured to prevent the first frame and the second frame from moving outward.

The fixing member may have a locking member configured to catch the first frame and the second frame.

The locking member provided in the first frame and the locking member provided in the second frame may be disposed to face in opposite directions.

The locking member may be provided to face ends of the first frame and the second frame.

A plurality of fixing members may be arranged along a widthwise direction of the module frame.

The plurality of fixing members may be at least partially arranged with varying densities along the widthwise direction of the module frame.

One of the first frame and the second frame may be configured to be partially inserted into the other.

In another aspect of the present disclosure, there is provided a battery pack including a battery module according to the present disclosure.

In another aspect of the present disclosure, there is provided a vehicle including a battery module according to the present disclosure.

### Advantageous Effects

According to one aspect of the present disclosure, in a case where the battery module is coupled to the cooling plate, lifting of the bottom side of the battery module can be suppressed. Accordingly, all battery cells can remain in contact with the cooling plate, thereby improving the cooling performance of the battery module.

Furthermore, according to one aspect of the present disclosure, the temperature difference among the battery cells can be minimized, thereby increasing the expected lifespan of the battery module. In particular, according to this aspect of the present disclosure, the performance of the battery module can be maximized.

In addition, according to another aspect of the present disclosure, since the fixing member is provided, separation of the first frame and the second frame can be prevented, thereby ensuring the structural stability of the battery module.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a conventional battery module as a comparative example.
FIG. 2 is an overall perspective view of a battery module according to an embodiment of the present disclosure.
FIG. 3 is an exploded perspective view of a battery module according to an embodiment of the present disclosure.
FIG. 4 is a cross-sectional view of a battery module according to an embodiment of the present disclosure, which may be a cross-sectional view taken along, for example, line I - I' in FIG. 2.
FIG. 5 is a cross-sectional view of a battery module to which a fixing member is applied according to an embodiment of the present disclosure.
FIG. 6 is an exploded perspective view of a partial configuration of a battery module according to an embodiment of the present disclosure.
FIG. 7 is a cross-sectional view of a battery module to which a fixing member is applied according to another embodiment of the present disclosure.
FIG. 8 is a cross-sectional view of a battery module to which a fixing member is applied according to another embodiment of the present disclosure.
FIG. 9 is a cross-sectional view of a battery module to which a fixing member is applied according to another embodiment of the present disclosure.
FIG. 10 is a cross-sectional view of a battery module to which a fixing member is applied according to another embodiment of the present disclosure.
FIG. 11 is a cross-sectional view of a battery module to which a fixing member is applied according to another embodiment of the present disclosure.
FIG. 12 is a cross-sectional view of a battery module according to another embodiment of the present disclosure.
FIG. 13 is a cross-sectional view of a battery module according to another embodiment of the present disclosure.
FIG. 14 is a schematic perspective view of a battery pack according to an embodiment of the present disclosure.
FIG. 15 is a schematic perspective view of a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction), i.e., a height direction of the battery cell, perpendicular to both the X-axis direction and the Y-axis direction.

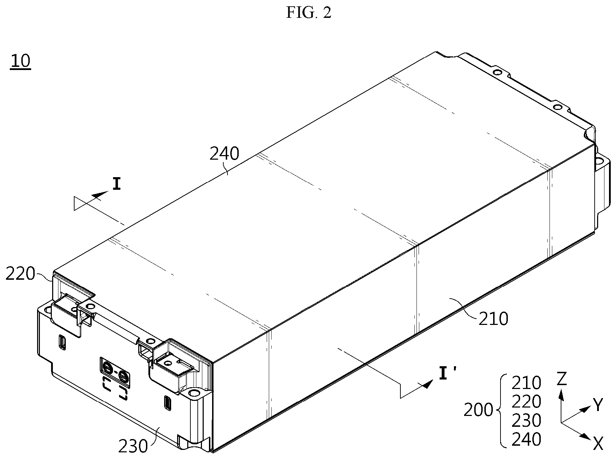

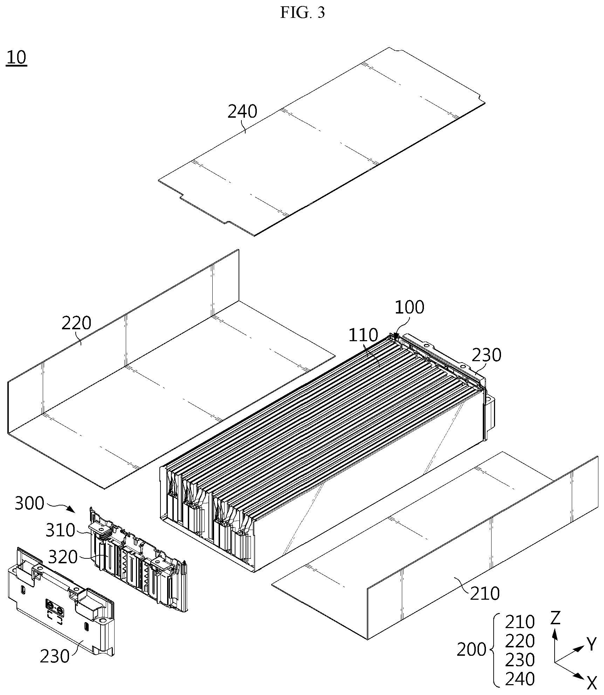

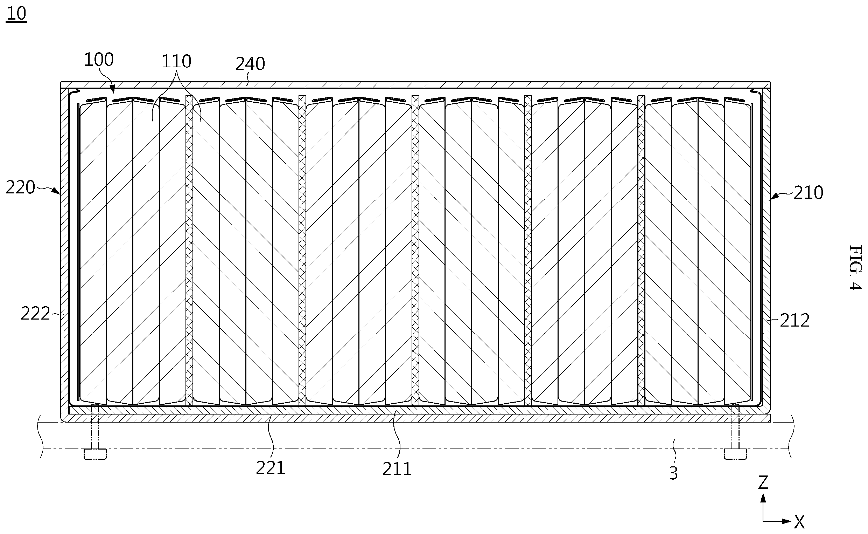

FIG. 2 is an overall perspective view of a battery module according to an embodiment of the present disclosure, and FIG. 3 is an exploded perspective view of a battery module according to an embodiment of the present disclosure. In addition, FIG. 4 is a cross-sectional view of a battery module according to an embodiment of the present disclosure, which may be a cross-sectional view taken along, for example, line I - I' in FIG. 2.

Referring to FIGS. 2 to 4, a battery module 10 according to the present disclosure includes a cell assembly 100 and a module frame 200.

The cell assembly 100 may include one or more battery cells 110, particularly, multiple battery cells 110. Here, each battery cell 110 may indicate one secondary battery, or may indicate a group of multiple secondary batteries. The described will be made in this specification, based on the battery cell 110 representing one secondary battery.

The plurality of battery cells 110 may include an electrode assembly, a cell case that stores the electrode assembly, and an electrode lead that is connected to the electrode assembly and extends outward from the cell case to function as an electrode terminal.

In this case, the cell case may have various shapes, and the battery cells may be classified into pouch-type cells, cylindrical cells, and prismatic cells depending on the shape of the cell case. Since the types of battery cells 110 were widely known at the time of filing of the present disclosure, a detailed description thereof will be omitted. Although the drawings of this specification illustrate a pouch-type battery cell, the present disclosure is applicable to all types of secondary batteries known at the time of filing of the present disclosure, and is not limited to a specific type of secondary battery.

In the cell assembly 100, a plurality of battery cells 110 may be configured to be stacked in one direction. For example, a plurality of battery cells 110 may be stacked in parallel along the left-right direction (±X-axis direction). This cell assembly 100 may include six sides. That is, the cell assembly 100 may be configured in a cuboid shape.

Referring to FIG. 3, the battery module 10 of the present disclosure may further include a bus-bar frame assembly 300. The bus-bar frame assembly 300 may be provided inside the module frame 200 and configured to cover at least one side of the plurality of battery cells 110. The bus-bar frame assembly 300 may be located on the side from which the electrode lead of the battery cells 110 extends outward. For example, the bus-bar frame assembly 300 may be coupled to the front and rear sides of the plurality of battery cells 110.

The bus-bar frame assembly 300 may include a bus-bar frame 310 and a plurality of bus-bars 320. The bus-bar frame 310 may be disposed to be coupled substantially to the front and rear sides of the plurality of battery cells 110. The bus-bar frame 310 may have slits through which the electrode leads of the battery cells 110 extend outward in the front-back direction.

In addition, the bus-bar frame 310 may be formed of a material having electrical insulation, such as a plastic material, and configured such that the bus-bar 320 is attachable to its outer surface.

A plurality of bus-bars 320 are means for connecting the battery cells 110 in series and/or parallel, and may each be configured in the form of a rod made of a metal material such as copper, aluminum, nickel, or the like.

The electrode leads of the battery cells 110 may pass through the slits of the bus-bar frame 310 and extend outside the bus-bar frame 310, and the extending portion may be attached to the surface of the bus-bar 320 by welding or the like.

The module frame 200 may be configured to store a cell assembly 100. Specifically, a storage space may be formed in the module frame 200, and the cell assembly 100 may be stored in the storage space. For example, the module frame 200 may be configured in a cuboid shape by combining several parts. Accordingly, the module frame 200 may be configured to cover six sides of the cell assembly 100. The module frame 200 may be at least partially made of metal and/or plastic materials.

Although not shown in the drawing, the module frame 200 may have a venting hole formed on at least one side to discharge venting gas generated from the battery cell 110 to the outside of the module frame 200.

In addition, the module frame 200 may include a first frame 210 and a second frame 220. The first frame 210 and the second frame 220 may be coupled to each other to form the exterior of the module frame 200, and may store the cell assembly 100 therein. In this case, various fastening methods such as welding, bonding, bolting, and hooking may be used for coupling between the first frame 210 and the second frame 220.

In particular, the first frame 210 and the second frame 220 may be coupled such that one side of each at least partially overlaps the other. That is, one side of the first frame 210 and one side of the second frame 220 are configured to at least partially overlap each other, so that the overlapping sides may be coupled to each other.

The first frame 210 and the second frame 220 may be configured to cover some of the six sides of the cell assembly 100. For example, the first frame 210 and the second frame 220 may be coupled to each other to cover the bottom side, the left side, and the right side of the cell assembly 100.

The battery module 10 according to an embodiment of the present disclosure may be configured to be in contact with a cooling plate 3 that is provided on the outer side of the battery module 10 and cools the battery module 10. For example, the cooling plate 3 may be provided at the bottom of the battery module 10 and configured to allow the module frame 200 to be seated on the cooling plate 3.

In this case, the cooling plate 3 may be bolted to the module frame 200 along the edges thereof, and according to the above-implemented configuration of the present disclosure, since the first frame 210 and the second frame 220 are coupled such that one side of each at least partially overlaps the other, the bottom side of the module frame 200 may be prevented from lifting from the cooling plate 3. In particular, since lifting of the central portion of the bottom side of the module frame 200 is suppressed, all battery cells 110 may remain in contact with the cooling plate 3, thereby improving the cooling performance of the battery module 10.

Furthermore, according to the above-implemented configuration of the present disclosure, the temperature difference among the battery cells 110 may be minimized, so that the expected lifespan of the battery module 10 may be increased. In particular, according to this aspect of the present disclosure, the performance of the battery module 10 may be maximized.

Hereinafter, the specific structures of the first frame 210 and the second frame 220 will be described. The first frame 210 and the second frame 220 may be configured in a bent form. The first frame 210 and the second frame 220 may be configured by bending a single plate. The first frame 210 and the second frame 220 may be configured to be bent once.

As a more specific example, in the embodiment shown in FIG. 4, at least one of the first frame 210 and the second frame 220 may be configured in an L-shape with four open sides. The first frame 210 and the second frame 220 may be configured to have two edges at each open end. For example, the first frame 210 and the second frame 220 may be configured substantially in an L-shape when viewed from the front and rear.

In particular, the first frame 210 and the second frame 220 may be bent in opposite directions. That is, the bent portions of the first frame 210 and the second frame 220 may be disposed to face opposite directions. For example, the bent portions of the first frame 210 and the second frame 220 may be disposed to face outward relative to each other. In this case, the first frame 210 may be configured to cover the lower side and the left side of the cell assembly 100, and the second frame 220 may be configured to cover the lower side and the right side of the cell assembly 100.

In this case, the first frame 210 may be configured in an integrated form to cover the lower side and the left side of the cell assembly 100. In addition, the second frame 220 may be configured in an integrated form to cover the lower side and the right side of the cell assembly 100.

The first frame 210 and the second frame 220 may each have a horizontal portion and a vertical portion. The first frame 210 may have a first horizontal portion 211 and a first vertical portion 212. In addition, the second frame 220 may have a second horizontal portion 221 and a second vertical portion 222.

The first horizontal portion 211 and the second horizontal portion 221 may be configured to allow the cell assembly 100 to be seated thereon. That is, the first horizontal portion 211 and the second horizontal portion 221 may form the lower sides of the first frame 210 and the second frame 220, respectively.

The first vertical portion 212 and the second vertical portion 222 may be configured to extend in a vertical direction from the ends of the first horizontal portion 211 and the second horizontal portion 221, respectively. The first vertical portion 212 and the second vertical portion 222 may be configured to extend from the ends of the first horizontal portion 211 and the second horizontal portion 221, which face different directions from each other. For example, the first vertical portion 212 may be configured to extend from the +X-axis direction end of the first horizontal portion 211, and the second vertical portion 222 may be configured to extend from the -X-axis direction end of the second horizontal portion 221. The first vertical portion 212 and the second vertical portion 222 may be configured to face each other. The first vertical portion 212 and the second vertical portion 222 may be configured to cover both sides of the cell assembly 100 in the widthwise direction, respectively.

The first horizontal portion 211 of the first frame 210 and the second horizontal portion 221 of the second frame 220 may be configured to at least partially overlap each other. That is, the lower side of the first frame 210 and the lower side of the second frame 220 may be configured to overlap each other.

According to the above-implemented configuration of the present disclosure, even if the cooling plate 3 is bolted to the module frame 200 along the edges thereof, since the lower sides of the first frame 210 and the second frame 220, which are seated on the cooling plate 3, are coupled to overlap each other, it is possible to suppress lifting of the bottom side of the module frame 200 from the cooling plate 3. In particular, since the central portion of the bottom side of the module frame 200 is prevented from lifting, all battery cells 110 may remain in contact with the cooling plate 3, so that the cooling performance of the battery module 10 may be improved.

Furthermore, according to the above-implemented configuration of the present disclosure, the temperature difference among the battery cells 110 may be minimized, so that the expected lifespan of the battery module 10 may be increased. In particular, according to this aspect of the present disclosure, the performance of the battery module 10 may be maximized.

The first frame 210 may be provided further inward than the second frame 220. The first frame 210 may be configured to be seated on the second frame 220. That is, the first horizontal portion 211 of the first frame 210 may be configured to be seated on the second horizontal portion 221 of the second frame 220. In this case, the second vertical portion 222 may be configured to be longer than the first vertical portion 212. In addition, the second horizontal portion 221 may be configured to be longer than the first horizontal portion 211. Accordingly, when the first frame 210 and the second frame 220 are combined, the module frame 200 may be configured to have a substantially cuboid shape.

Referring to FIG. 3 and the like, the module frame 200 may further include an end plate 230 and a top plate 240. The end plate 230 and the top plate 240 may be configured to cover the sides of the cell assembly 100, which are not covered by the first frame 210 and the second frame 220. The end plate 230 and the top plate 240 may be coupled to the first frame 210 and the second frame 220.

The end plate 230 may be configured to cover the front and rear sides of the cell assembly 100. The end plate 230 may be coupled to both ends of the first frame 210 and the second frame 220 in the front-back direction.

Although not shown in the drawing for convenience, the end plate 230 may be configured such that, for example, an inner surface is made of an insulating material and an outer surface is made of a metal material. In addition, the end plate 230 may be partially provided with holes or slits for exposing components that are required to be exposed to the outside, such as a positive electrode terminal and negative electrode terminal or a connector of the battery module 10.

The top plate 240 may be configured to cover the upper side of the cell assembly 100. The top plate 240 may be provided to form the upper side of the module frame 200. The top plate 240 may be coupled to the upper ends of the first vertical portion 212 and the second vertical portion 222. The top plate 240 may be coupled to the first frame 210 and the second frame 220 by welding.

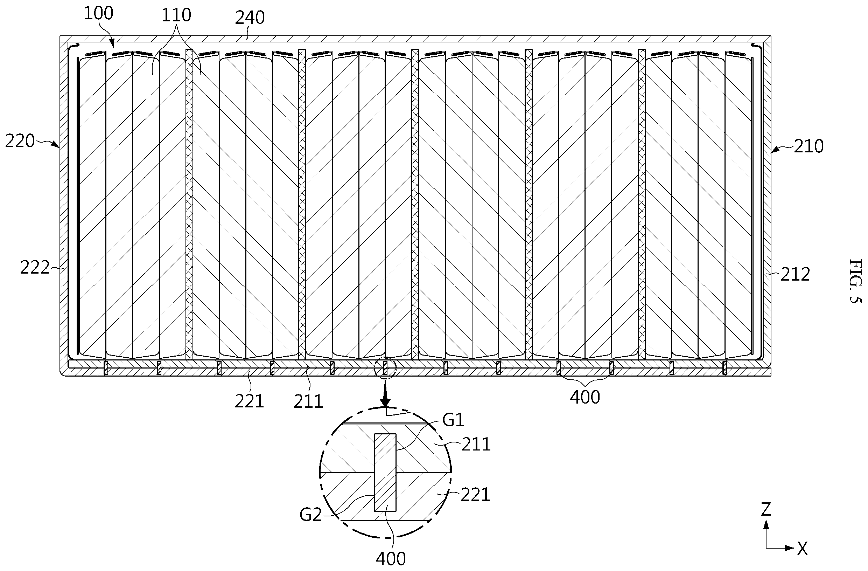

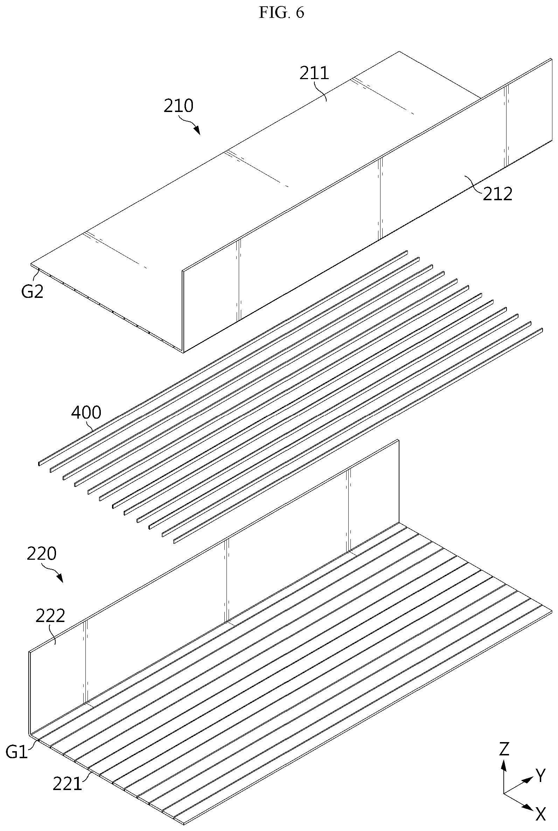

FIG. 5 is a cross-sectional view of a battery module to which a fixing member is applied according to an embodiment of the present disclosure, and FIG. 6 is an exploded perspective view of a partial configuration of a battery module according to an embodiment of the present disclosure.

Referring to FIGS. 5 and 6, the battery module 10 according to an embodiment of the present disclosure may further include a fixing member 400. The fixing member 400 may be configured to combine the overlapping portions of the first frame 210 and the second frame 220. For example, the fixing member 400 may be configured to couple lower sides of the first frame 210 and the second frame 220 to each other.

According to the above-implemented configuration of the present disclosure, since the fixing member 400 is provided, the bonding force between the first frame 210 and the second frame 220 may be improved, and the separation of the first frame 210 and the second frame 220 may be prevented, thereby securing the structural stability of the battery module 10.

Specifically, the fixing member 400 may be configured to be inserted into the overlapping sides of the first frame 210 and the second frame 220. The fixing member 400 may be provided inside the overlapping sides of the first frame 210 and the second frame 220.

In a case where the first frame 210 is disposed inward from the second frame 220, a first insertion groove G1 may be formed on the lower surface of the first horizontal portion 211 to be recessed inward therefrom. In addition, a second insertion groove G2 may be formed on the upper surface of the second horizontal portion 221 to be recessed inward therefrom. The fixing member 400 may be configured to be inserted into the first insertion groove G1 and the second insertion groove G2. The first insertion groove G1 and the second insertion groove G2 may be configured in a shape corresponding to the shape of the fixing member 400.

When manufacturing a battery module 10, after the first frame 210 is placed on the second frame 220, the fixing member 400 may be inserted into the first insertion groove G1 and the second insertion groove G2 by sliding from the front or rear of the battery module 10, thereby connecting the first frame 210 and the second frame 220.

According to the above-implemented configuration of the present disclosure, the first frame 210 and the second frame 220 may be coupled with only a simple structure in which the fixing member 400 is inserted to the groove. Accordingly, the assemblability of the first frame 210 and the second frame 220 may be improved. In addition, the productivity may be improved when manufacturing the battery module 10.

The fixing member 400 may be configured to extend along the longitudinal direction of the battery cell 110. The fixing member 400 may be configured to have a length corresponding to the length of the first frame 210 and the second frame 220.

The fixing member 400 may be configured in the form of a thin rod extending in the longitudinal direction. For example, as disclosed in the embodiments illustrated in FIGS. 5 and 6, the rod-shaped fixing member 400 may be provided in a standing state in the vertical direction.

According to the above-implemented configuration of the present disclosure, the number of fixing members 400 may be minimized so that the first frame 210 and the second frame 220 may be combined along the length of the module frame 200. Accordingly, productivity may be improved when manufacturing the battery module 10.

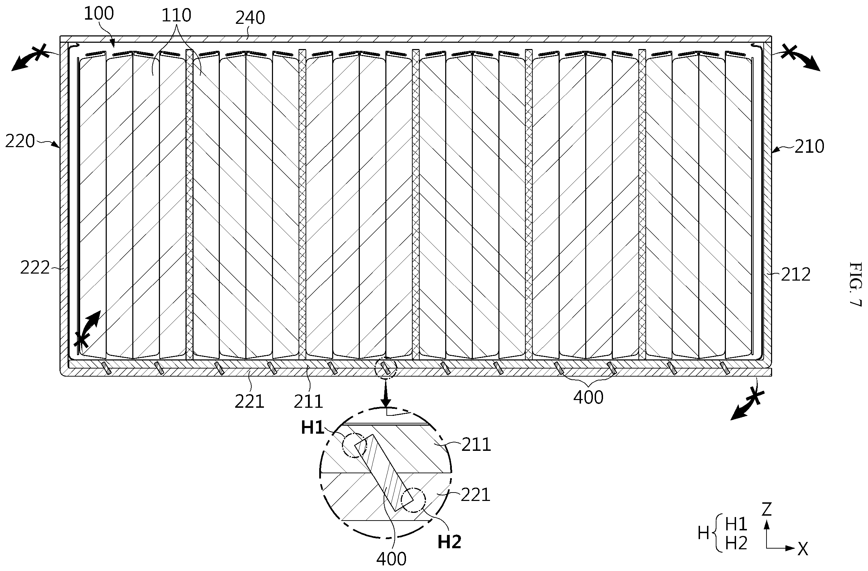

FIGS. 7 to 10 are cross-sectional views of a battery module to which a fixing member is applied, according to other embodiments of the present disclosure, respectively.

Since the lower sides of the first frame 210 and the second frame 220 are provided to overlap each other, the first frame 210 and the second frame 220 may have a force to rotate outward, so that the first frame 210 and the second frame 220 may be separated from each other. For example, the first frame 210 and the second frame 220 may move or rotate in a direction in which at least portions thereof move away from each other. In particular, the upper end of the first vertical portion 212 and the upper end of the second vertical portion 222 may move away from each other. In addition, the end of the first horizontal portion 211 and the end of the second horizontal portion 221 may move away from each other.

To solve this, the fixing member 400 may be configured to prevent the first frame 210 and the second frame 220 from moving outward. In this case, the shape, arrangement structure, or arrangement direction of the fixing member 400 may be configured in various ways.

According to the above-implemented configuration of the present disclosure, since the fixing member 400 is configured to prevent the first frame 210 and the second frame 220 from being separated from each other, the structural stability of the battery module 10 may be secured. In particular, it is possible to suppress lifting of the central portion of the module frame 200 due to warping deformation of the first horizontal portion 211 and the second horizontal portion 221. Accordingly, the cooling performance of the battery module 10 may be further improved.

In addition, according to the above-implemented configuration of the present disclosure, when swelling occurs in the cell assembly 100, the first vertical portion 212 and the second vertical portion 222 may move away from the cell assembly 100 due to the swelling of the cell assembly 100, but according to the above-implemented configuration of the present disclosure, the coupled state of the first frame 210 and the second frame 220 may be stably maintained. Accordingly, excessive swelling of the cell assembly 100 may be suppressed.

In addition, even if a thermal event such as venting gas or flame occurs in the battery module 10, the coupled state of the module frame 200 may be stably maintained. Accordingly, it is possible to prevent the module frame 200 from being separated and prevent the venting gas or flame from leaking to the outside according thereto. In addition, according to the above-implemented configuration of the present disclosure, it is possible to effectively prevent fire from spreading by oxygen or the like flowing into the interior through the damaged or broken portion of the module frame 200. Therefore, the safety of the battery module 10 may be secured.

As a more specific example, the fixing member 400 may have a locking member H. The locking member H may be configured to catch the first frame 210 and the second frame 220. That is, when the first frame 210 and the second frame 220 attempt to rotate outward, the locking member H of the fixing member 400 is configured to be caught by the first insertion groove G1 and the second insertion groove G2, thereby suppressing separation of the first frame 210 and the second frame 220.

Moreover, the locking member H may be provided on both the first frame 210 and the second frame 220. The first frame 210 and the second frame 220 tend to rotate in opposite directions. For example, the first frame 210 is to be rotated counterclockwise, and the second frame 220 is to be rotated clockwise. In this case, the first locking member H1 provided on the first frame 210 and the second locking member H2 provided on the second frame 220 may be disposed to face opposite directions. The first locking member H1 and the second locking member H2 may be disposed to face the outer sides of the first frame 210 and the second frame 220, respectively.

In particular, the locking member H may be provided to face the ends of the first frame 210 and the second frame 220. That is, the first locking member H1 may be disposed to face the end of the first horizontal portion 211, and the second locking member H2 may be disposed to face the end of the second horizontal portion 221.

According to the above-implemented configuration of the present disclosure, when the end of the first horizontal portion 211 and the end of the second horizontal portion 221 rotate in the outward direction so that the first frame 210 and the second frame 220 are separated from each other, the first locking member H1 and the second locking member H2 may catch the end of the first horizontal portion 211 and the end of the second horizontal portion 221, respectively, thereby more effectively suppressing the separation of the first frame 210 and the second frame 220.

The locking member H may be configured in various forms, such as a hook, a protrusion, or a bent shape.

For example, as disclosed in the embodiment illustrated in FIG. 7, the fixing member 400 may be configured in a rod shape. The fixing member 400 may be disposed obliquely so that the vertex of the fixing member 400 may be defined as a locking member H. The fixing member 400 may be formed to be inclined so that a first locking member H1 faces the -X-axis direction and a second locking member H2 faces the +X-axis direction.

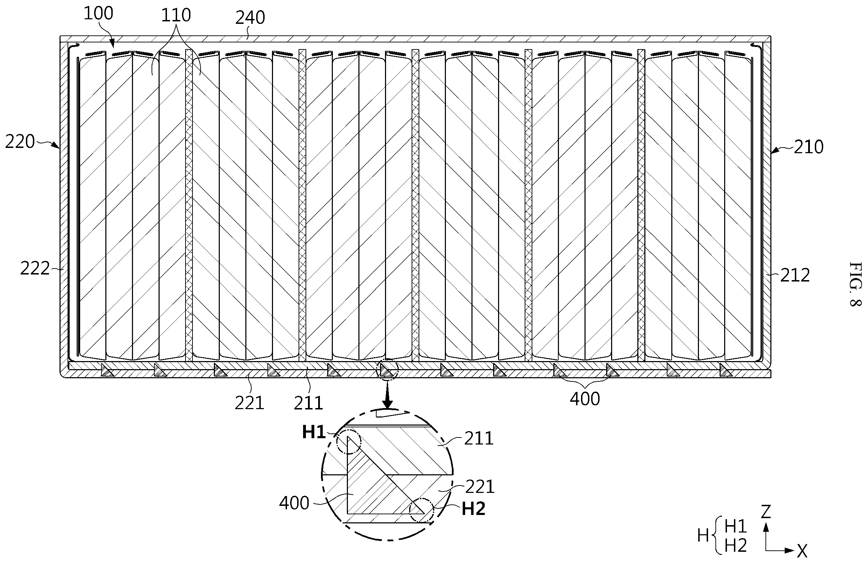

Alternatively, as another embodiment, in the embodiment illustrated in FIG. 8, the fixing member 400 may be configured in a triangular shape. For example, the fixing member 400 may be configured in a right-angled triangle shape. In this case, the vertices of the fixing member 400, excluding the right-angled vertex, may be defined as the first locking member H1 and the second locking member H2, respectively. The fixing member 400 may be disposed so that the hypotenuse faces the +X-axis direction. Accordingly, the first locking member H1 and the second locking member H2 may be disposed in opposite directions relative to each other. Alternatively, unlike the above embodiment, the fixing member 400 may be configured in the shape of an obtuse triangle.

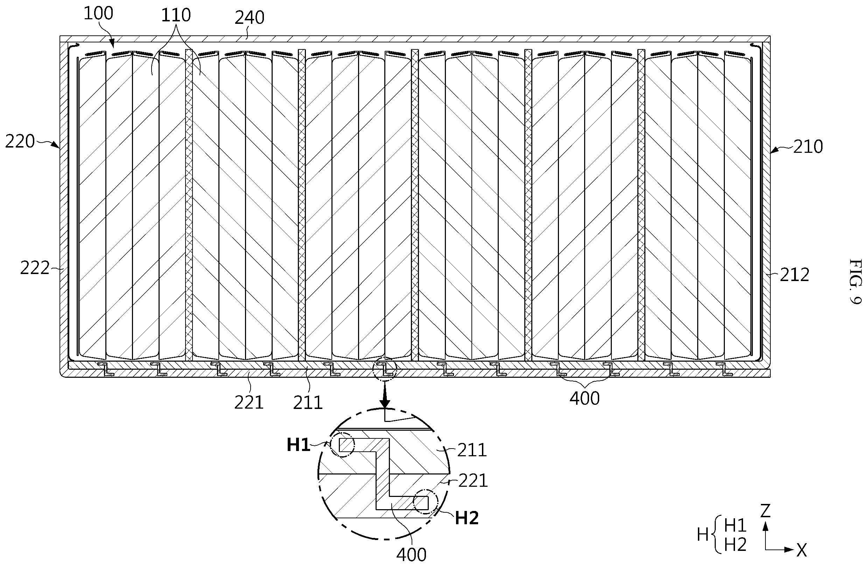

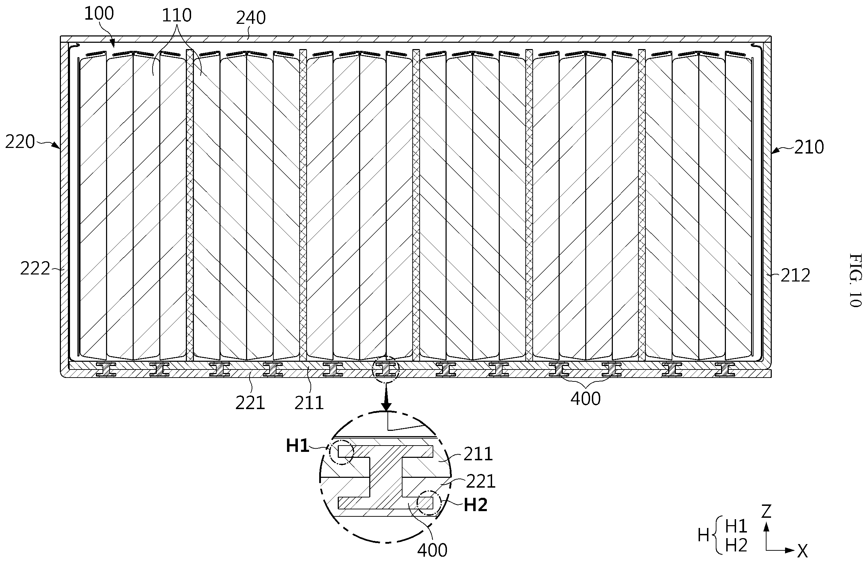

As another embodiment, the fixing member 400 may be configured as a hook or protrusion. That is, the fixing member 400 may be configured in a shape in which the first locking member H1 and the second locking member H2 are each bent multiple times. For example, as disclosed in the embodiment illustrated in FIG. 9, the fixing member 400 may be configured in a Z-shape. Alternatively, as disclosed in the embodiment illustrated in FIG. 10, the fixing member 400 may be configured in an I- shape.

The shape of the fixing member 400 is not limited to the embodiments illustrated in FIGS. 7 to 10. In addition to the forms of the fixing member 400 described above, the fixing member 400 may be configured in any form as long as the first locking member H1 and the second locking member H2 are disposed in opposite directions to prevent the first frame 210 and the second frame 220 from being separated.

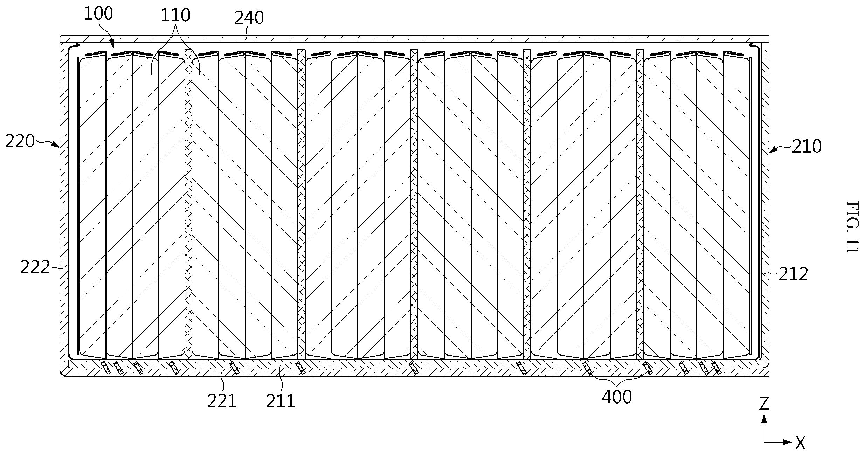

FIG. 11 is a cross-sectional view of a battery module to which a fixing member is applied according to another embodiment of the present disclosure.

The fixing member 400 may be provided in plurality. A plurality of fixing members 400 may be disposed along the widthwise direction of the module frame 200. According to the above-implemented configuration of the present disclosure, since a plurality of fixing members 400 are disposed along the direction in which the first frame 210 and the second frame 220 overlap, the bonding force between the first frame 210 and the second frame 220 may be further enhanced. Accordingly, the separation of the first frame 210 and the second frame 220 may be further suppressed.

In particular, the plurality of fixing members 400 may be disposed to better fix the end of the first horizontal portion 211 and the end of the second horizontal portion 221 than the center thereof.

For example, as disclosed in the embodiment illustrated in FIG. 11, the plurality of fixing members 400 may be at least partially arranged with varying densities along the widthwise direction of the module frame 200. In particular, the plurality of fixing members 400 may be arranged such that the density thereof increases toward the outside of the module frame 200. That is, the number of fixing members 400 may increase from the inside to the outside of the module frame 200.

In this case, the plurality of fixing members 400 may be disposed to be symmetrical relative to the central axis of the module frame 200 in the widthwise direction.

Alternatively, although not shown in the drawing, the plurality of fixing members 400 may be configured such that the thicknesses or sizes thereof differ, at least in part, along the widthwise direction of the module frame 200.

According to the above-implemented configuration of the present disclosure, since the fixing members 400 are disposed such that the density thereof increases toward the outside of the module frame 200, the end of the first horizontal portion 211 and the end of the second horizontal portion 221 may be further prevented from moving outward in the overlapping portion between the first frame 210 and the second frame 220.

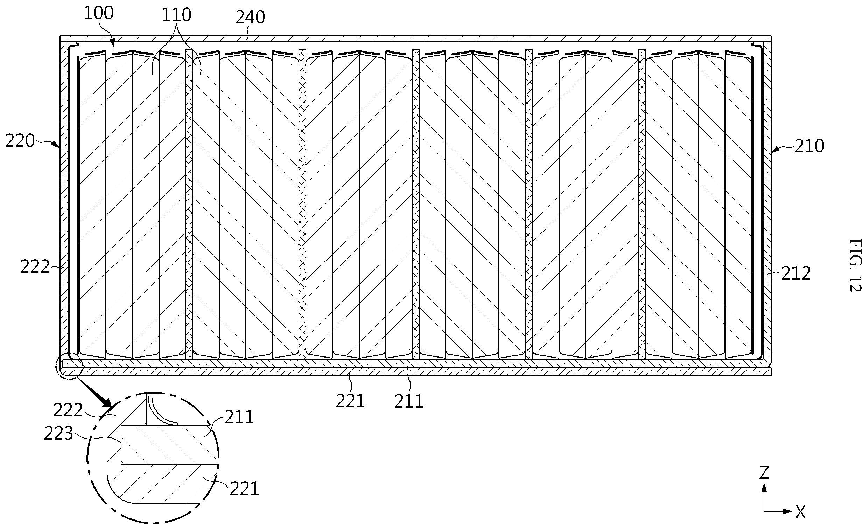

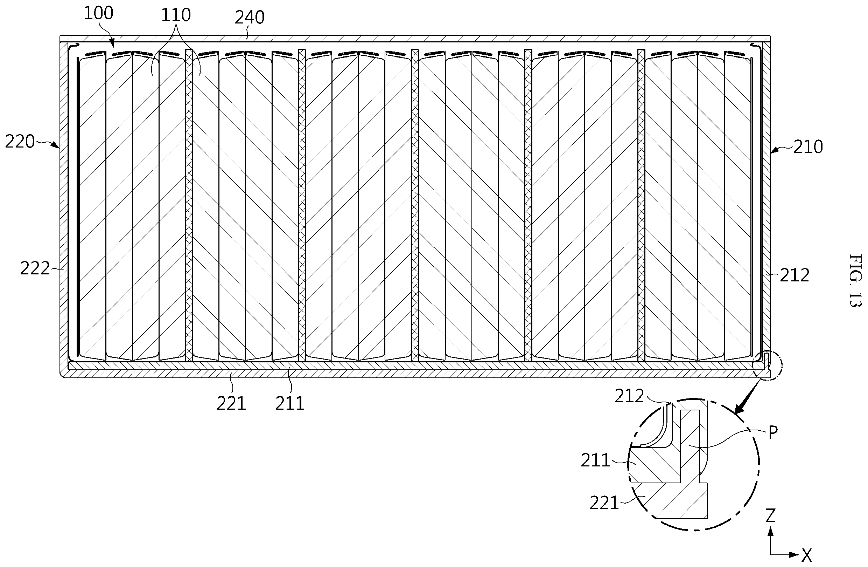

FIGS. 12 and 13 are cross-sectional views of a battery module according to another embodiment of the present disclosure, respectively.

Referring to FIGS. 12 and 13, one of the first frame 210 and the second frame 220 may be configured to be partially inserted into the other.

According to this configuration of the present disclosure, the insertion fastening configuration may be implemented between the first frame 210 and the second frame 220, so that the mechanical bonding force or assemblability between the first frame 210 and the second frame 220 may be further improved with a simpler structure.

As a more specific example, in the embodiment illustrated in FIG. 12, the end of the first horizontal portion 211 of the first frame 210 may be configured to be inserted into the second frame 220.

In this case, the second frame 220 may have a first recess 223 configured to be recessed inward. The first recess 223 may be formed on the inner surface of the second vertical portion 222. The first recess 223 may be configured so that the end of the first horizontal portion 211 is inserted thereinto. The first recess 223 may be configured to correspond to the position, shape, or size of the end of the first horizontal portion 211. Accordingly, the first frame 210 and the second frame 220 may be configured to be coupled to each other by insertion.

According to the above-implemented configuration of the present disclosure, since the end of the first frame 210 is inserted into the second frame 220, the first frame 210 may be prevented from rotating outward, thereby stably maintaining the coupled state of the first frame 210 and the second frame 220.

Alternatively, as disclosed in the embodiment illustrated in FIG. 13, the end of the second frame 220 may be configured to be inserted into the first frame 210. A protrusion P may be provided at the end of the second frame 220. The protrusion P may be provided at the end of the second horizontal portion 221. The protrusion P may be configured in a form in which a portion of the second horizontal portion 221 protrudes outward from its inner surface.

In addition, the first frame 210 may have a second recess 213 configured to be recessed inward. The second recess 213 may be provided on the outer surface of the first horizontal portion 211. The second recess 213 may be configured so that the protrusion P of the second frame 220 is inserted thereinto. The second recess 213 may be configured to correspond to the position, shape, or size of the protrusion P. Accordingly, the first frame 210 and the second frame 220 may be coupled to each other by insertion.

According to the above-implemented configuration of the present disclosure, since a portion of the second frame 220 is inserted into the first frame 210, the second frame 220 may be prevented from rotating outward, so that the coupled state of the first frame 210 and the second frame 220 may be stably maintained.

Although not shown in the drawing, the module frame 200 may have all of the first recess 223, the protrusion P, and the second recess 213.

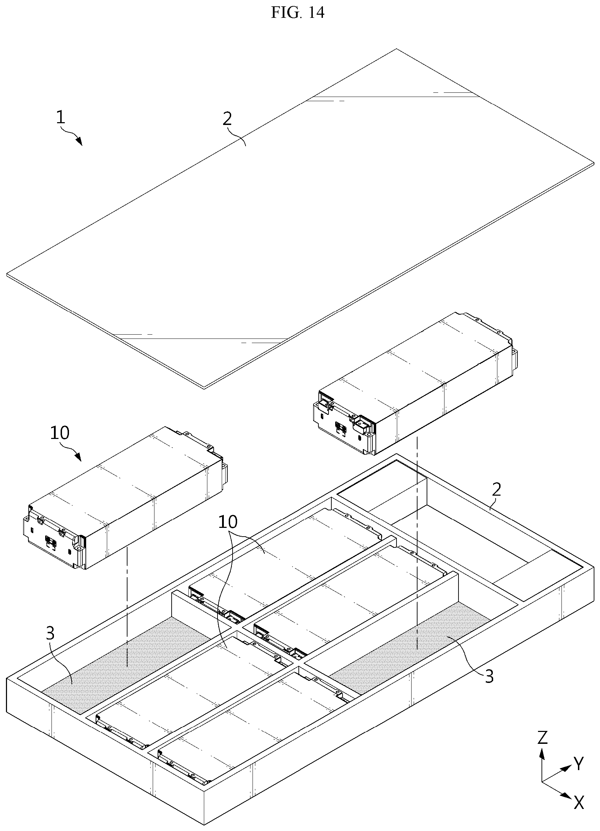

FIG. 14 is a schematic perspective view of a battery pack according to an embodiment of the present disclosure.

Referring to FIG. 14, the battery pack 1 according to an embodiment of the present disclosure may include one or more battery modules 10 according to an embodiment of the present disclosure described above. In addition, the battery pack 1 according to an embodiment of the present disclosure may further include a pack case 2. The pack case 2 may be configured to store a plurality of battery modules 10. The pack case 2 may be formed in a cuboid box shape.

Although not shown in the drawing, the pack case 2 may be configured to store components such as a BMS (Battery Management System), a current sensor, and a fuse for integrated control of charging and discharging of one or more battery cells 110 therein.

In addition, the battery pack 1 may further include a cooling plate 3 for cooling the battery module 10. The cooling plate 3 may be a plate-shaped member, or may be configured in a form in which a thermally conductive adhesive, such as a thermal resin, is cured. The cooling plate 3 may be provided inside the pack case 2. The cooling plate 3 may be provided at the bottom of the battery module 10.

The cooling plate 3 may be bolted to the edges of the lower side of the module frame 200. In this case, according to the above-implemented configuration of the present disclosure, since the first frame 210 and the second frame 220 are coupled such that one side of each at least partially overlap the other, the bottom side of the module frame 200 may be prevented from lifting from the cooling plate 3. In particular, since lifting of the central portion of the bottom side of the module frame 200 is suppressed, all battery cells 110 may remain in contact with the cooling plate 3, thereby improving the cooling performance of the battery module 10.

Furthermore, according to the above-implemented configuration of the present disclosure, the temperature difference among the battery cells 110 may be minimized, so that the expected lifespan of the battery module 10 may be increased. In particular, according to this aspect of the present disclosure, the performance of the battery module 10 may be maximized.

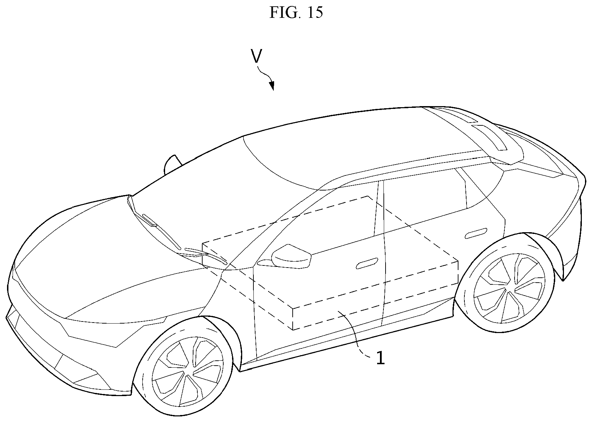

FIG. 15 is a schematic perspective view of a vehicle according to an embodiment of the present disclosure.

Referring to FIG. 15, a vehicle V according to an embodiment of the present disclosure may include one or more battery packs 1 according to an embodiment of the present disclosure. The vehicle V according to the present disclosure may be, for example, an electric vehicle, a hybrid vehicle, or a plug-in hybrid vehicle. The vehicle V may include a four-wheel vehicle and a two-wheel vehicle. The vehicle V may run on the power supplied from a battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a cell assembly comprising a plurality of battery cells; and
a module frame configured to store the cell assembly and comprising a first frame and a second frame coupled such that one side of each at least partially overlaps the other.

2. The battery module according to claim 1,
wherein the first frame and the second frame are configured in a bent shape.

3. The battery module according to claim 1,
wherein the first frame and the second frame each comprise
a horizontal portion configured to allow the cell assembly to be seated thereon, and
a vertical portion configured to extend in a vertical direction from an end of the horizontal portion.

4. The battery module according to claim 3,
wherein the horizontal portion of the first frame and the horizontal portion of the second frame are configured to at least partially overlap each other.

5. The battery module according to claim 1,
further comprising a fixing member configured to combine the overlapping portions of the first frame and the second frame.

6. The battery module according to claim 5,
wherein the fixing member is configured to be inserted into the overlapping sides of the first frame and the second frame.

7. The battery module according to claim 5,
wherein the fixing member is configured to extend along a longitudinal direction of the battery cell.

8. The battery module according to claim 5,
wherein the fixing member is configured to prevent the first frame and the second frame from moving outward.

9. The battery module according to claim 5,
wherein the fixing member has a locking member configured to catch the first frame and the second frame.

10. The battery module according to claim 9,
wherein the locking member provided in the first frame and the locking member provided in the second frame are disposed to face in opposite directions.

11. The battery module according to claim 9,
wherein the locking member is provided to face ends of the first frame and the second frame.

12. The battery module according to claim 5,
wherein a plurality of fixing members are arranged along a widthwise direction of the module frame.

13. The battery module according to claim 12,
wherein the plurality of fixing members are at least partially arranged with varying densities along the widthwise direction of the module frame.

14. The battery module according to claim 1,
wherein one of the first frame and the second frame is configured to be partially inserted into the other.

15. A battery pack comprising a battery module according to any one of claims 1 to 14.

16. A vehicle comprising a battery module according to any one of claims 1 to 14.
